# FASCICULE DE BREVET EUROPEEN

(11) **EP 1 215 899 B1**
(45) Date de publication et mention de la délivrance du brevet: **30.06.2004**
(21) Numéro de dépôt: 01470022.3
(22) Date de dépôt: 30.11.2001
(51) Int. Cl.: H04N 5/445, H04N 9/64

(54) **Procédé et dispositif associé d'affichage de texte sur un écran d'un récepteur de télévision**
Verfahren und zugehörige Vorrichtung zur Anzeige von Text auf einem Fernsehschirm
Method and associated device for displaying text on a television screen

(30) Priorité: 06.12.2000 FR 0015782
(43) Date de publication de la demande: 19.06.2002
(73) Titulaire: STMicroelectronics S.A., 92120 Montrouge (FR)
(72) Inventeur: Voyer, Pascal, c/o Cabinet Ballot, 57070 Metz (FR)
(74) Mandataire: Bentz, Jean-Paul

(56) Documents cités:
- "INMOS COLOUR LOOK-UP TABLES" MICROPROCESSORS AND MICROSYSTEMS, IPC BUSINESS PRESS LTD. LONDON, GB, vol. 16, no. 1, 1992, pages 37-49, XP000272470 ISSN: 0141-9331
- KUMMER D A ET AL: "Use of color palette system to provide blink video in a digital CRT display system" IBM TECHNICAL DISCLOSURE BULLETIN, JUNE 1984, USA, vol. 27, no. 1A, page 74 XP002176686 ISSN: 0018-8689

## Description

L'invention concerne un procédé et un dispositif associé d'affichage de texte sur un écran d'un récepteur de télévision. La présente invention est plus particulièrement intéressante pour afficher des pages d'un service télétexte, tel que défini dans la norme ETS 300 706 de mai 1997 (ETS : "Enhanced Teletext Spécification"). Plus généralement, l'invention est intéressante pour tout type d'affichage sur écran (en anglais : On Screen Dysplay ou OSD) comme par exemple l'affichage d'informations de gestion du fonctionnement du récepteur de télévision.

Le télétexte est un service annexe des chaînes de télévision destiné à transmettre des informations écrites en complément d'informations vidéo. Ces informations écrites sont présentées sous forme de pages qui sont diffusées les une à la suite des autres et l'ensemble des pages du programme télétexte est diffusé de manière cyclique. Chaque page comprend environ 25 lignes de 40 à 60 caractères. Les données correspondantes sont transmises ligne par ligne, le contenu d'une ligne étant transmis dans un ou plusieurs paquets de données.

Les informations à afficher concernant la gestion du fonctionnement du récepteur de télévision sont par exemple des informations pour le réglage du niveau sonore du récepteur, du contraste de l'écran, etc. De telles informations sont affichées sur l'écran sous la forme d'une ou plusieurs chaînes de caractères qui viennent s'afficher, sous forme de menus ou de texte écrit, en surimpression par exemple sur une image vidéo. Ces informations sont par exemple transmises par un circuit de gestion du fonctionnement du récepteur ; elles ont le plus souvent pour but d'aider le téléspectateur à contrôler le fonctionnement de son récepteur.

Dans ce qui suit, le mot "texte" sera employé au sens large pour désigner tout type de texte à afficher sur un écran, par exemple une page télétexte ou simplement une chaîne de caractères (comportant un ou plusieurs caractères), de type menu ou autre.

Les données numériques transmises par une chaîne de télévision ou par le circuit de gestion du fonctionnement du récepteur, peuvent comprendre par exemple des codes de caractères à afficher. Les données numériques peuvent également comprendre un code d'un attribut, c'est-à-dire une indication sur la mise en forme à appliquer aux caractères (couleur de fond de page, couleur d'encre, police, etc.). Le plus souvent, un attribut doit être appliqué à tous les caractères qui le suivent, jusqu'au prochain attribut.

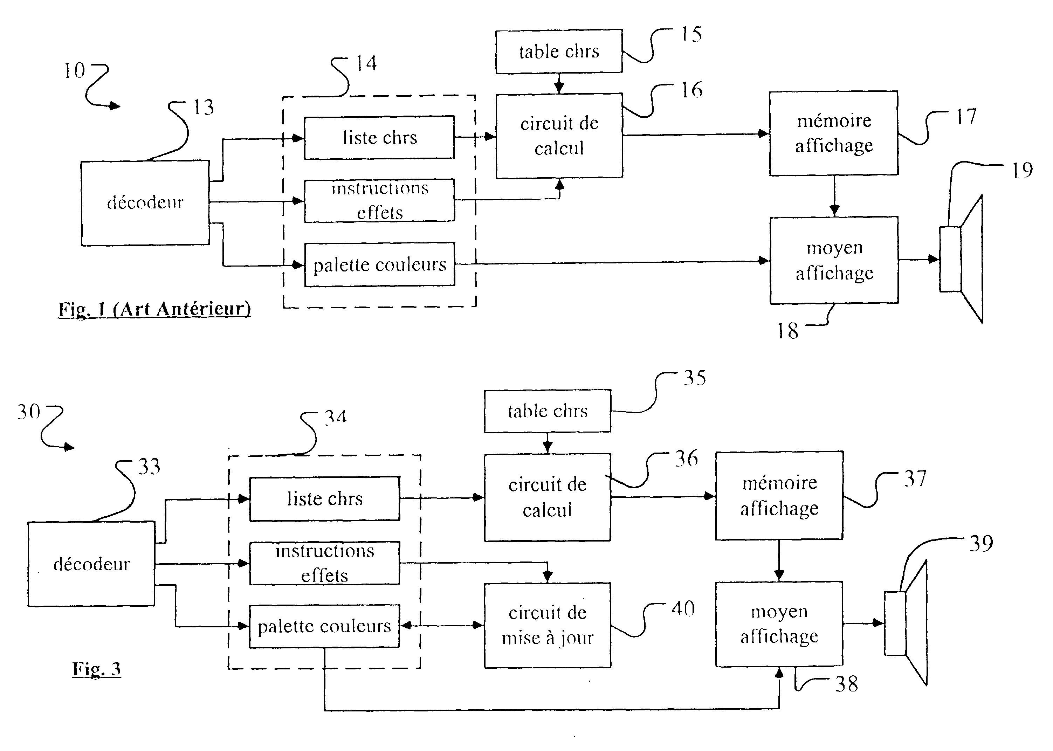

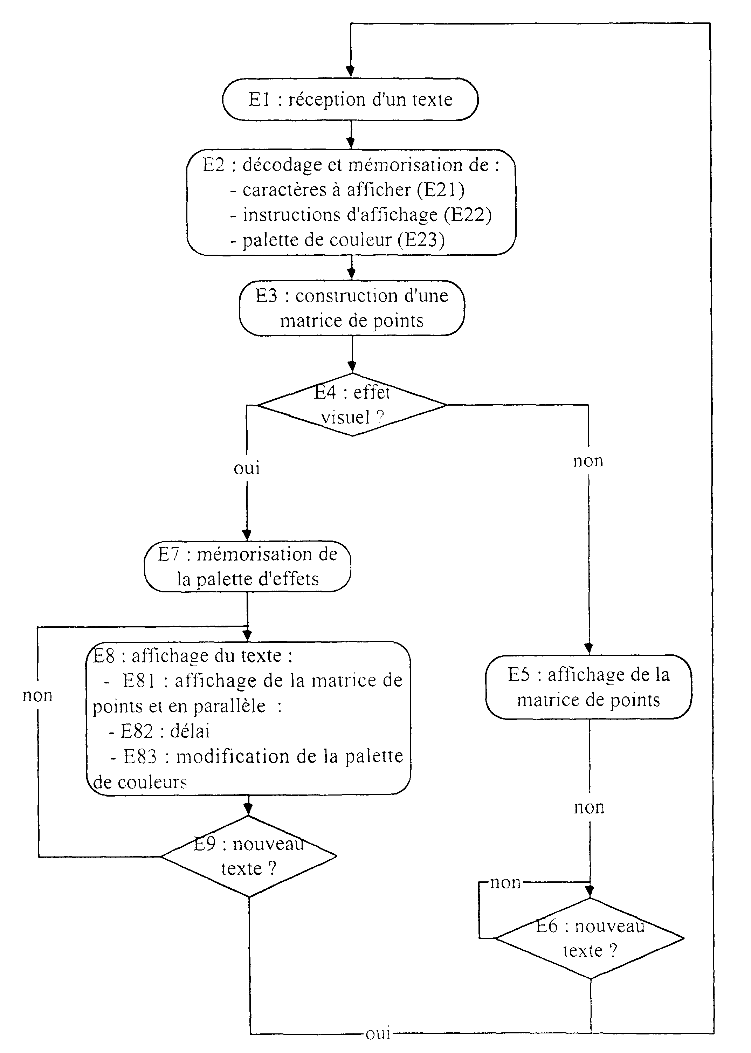

Un récepteur 10 de télévision connu comprend notamment, conformément à la figure 1, un décodeur 13, une mémoire de données 14, une mémoire morte 15, un circuit de calcul 16, une mémoire d'affichage 17, des moyens d'affichage 18 et un écran 19.

Des données numériques sont reçues par le décodeur 13. Elles peuvent être fournies par une chaîne émettrice d'un programme télétexte. Dans ce cas, un circuit de détection et de démodulation extrait les données d'un signal vidéo qu'il reçoit et les fournit au décodeur 13. Les données numériques peuvent également être fournies par un circuit (non représenté) de gestion du fonctionnement du récepteur 10.

Les données numériques reçues sont relatives à un texte et elles contiennent des informations relatives au contenu du texte et des attributs de mise en forme des caractères du texte.

Les données numériques sont reçues et décodées par le circuit 13, qui en extrait une liste de caractères à afficher mis en forme, la liste étant mémorisée dans la mémoire 14. Chaque caractère de la liste de caractères à afficher est défini par un code de caractère, une couleur d'encre et une couleur de fond. Le mot caractère doit être compris au sens large, un caractère peut ainsi être une lettre d'un alphabet, une forme géométrique ou bien une forme quelconque. Une liste des caractères couramment utilisés est définie dans la norme ETS.

Des données numériques reçues, le décodeur 13 extrait également une liste d'instructions d'effets visuels à appliquer aux caractères du texte à afficher et une palette de couleurs, ces deux éléments étant également mémorisés dans la mémoire vive 14.

Un effet visuel est une modification, sur l'écran d'affichage et dans le temps, de l'apparence d'un caractère, d'un ensemble de caractères, d'une ligne, d'une page, etc. La modification peut éventuellement, mais pas nécessairement, être répétitive. Par exemple, une instruction d'effet peut être "faire clignoter les caractères x, y, z à la fréquence de 3 Hz " ou bien "effacer le caractère A au bout de 50 secondes"

La palette de couleurs est quant à elle une table dans laquelle est associée, à chaque code couleur, une définition de la couleur correspondante. Le code couleur est par exemple un nombre de 8 bits. La palette de couleurs comprend notamment 16 couleurs fixes, définies dans la norme ETS, ces couleurs sont par exemple le blanc, le noir, un rouge, un bleu, un jaune, etc. La palette de couleurs peut également comprendre 16 couleurs définies par la chaîne émettrice du programme télétexte, la définition de ces couleurs étant transmise en début de programme ou même en début de page. D'autres normes prévoient également de réserver 64 couleurs pour les fabricants de récepteurs de télévision afin de leur permettre de créer des menus, des chaînes de caractère pour faciliter le contrôle du récepteur par l'utilisateur.

La mémoire morte 15 comprend une table de caractères associant, à chaque code de caractère, une image à deux couleurs caractéristique du caractère, une couleur de fond de l'image et une couleur d'encre.

Le circuit de calcul 16 mémorise des informations à afficher dans la mémoire d'affichage 17, les informations à afficher étant obtenues à partir de la table de caractères et de la liste de caractères à afficher contenue dans la mémoire 14.

Enfin, les moyens d'affichage 18 recopient, sur l'écran 19 du récepteur 10, le contenu de la mémoire d'affichage 17, en fonction de la palette de couleurs.

Dans un premier mode d'affichage dit affichage par caractère, le plus ancien et le plus couramment utilisé pour des applications télétexte, le circuit de calcul 16 copie dans la mémoire d'affichage 17 et pour chaque caractère à afficher successivement, l'image associée au caractère en précisant le code couleur associé à la couleur d'encre et le code couleur associé à la couleur de fond à utiliser pour afficher cette image. Eventuellement si une instruction d'effet est contenue dans la mémoire 14, alors le circuit de calcul 16 va modifier, en fonction de l'instruction d'effet, partiellement ou complètement le contenu de la mémoire d'affichage 17 relatif à un ou plusieurs caractères auxquels s'applique l'effet, enfin, les moyens d'affichage 18 vont lire en permanence la mémoire d'affichage et recopier son contenu sur l'écran 19, en fonction de la liste de couleurs de la palette de couleurs contenue dans la mémoire 14.

Dans un deuxième mode d'affichage dit affichage par point, le circuit 16 calcule, à partir de la liste de caractères à afficher et de la table de caractères, une matrice de points (pixels en anglais) et la mémorise dans la mémoire d'affichage 17. Chaque élément de la matrice de points contient un code d'une couleur définie dans la palette de couleur. De plus, à chaque élément de la matrice correspond un point de l'écran 19. La matrice complète correspond ainsi à l'ensemble des caractères à afficher sur l'écran, mis en forme.

La taille de la matrice est fonction du nombre de points qu'il est possible d'afficher sur l'écran 19 du récepteur de télévision 10, ce nombre dépendant de la taille de l'écran 19 et de sa résolution (c'est-à-dire la taille minimale du point que les moyens d'affichage sont capables de dessiner sur l'écran). La matrice peut contenir par exemple 1024*768 éléments.

Les moyens d'affichage 18 du récepteur 10 viennent ensuite lire la matrice de points mémorisée dans la mémoire d'affichage 17 puis afficher, élément par élément, ligne par ligne, des points correspondant sur l'écran 19.

Dans ce deuxième mode d'affichage, l'information contenue dans les données numériques reçues et mémorisée dans la mémoire vidéo n'est plus définie par des caractères à afficher, mais par des points correspondants au points de l'écran d'affichage.

L'avantage du mode d'affichage par point des données télétexte est qu'il permet d'afficher non seulement du texte mais également des images, ce que ne permet pas ou très peu un mode d'affichage par caractère puisque à chaque caractère est associée une image prédéfinie et figée.

Un autre avantage du mode d'affichage par point est qu'il permet d'exploiter au mieux les caractéristiques de résolution fine de l'écran, il est alors possible d'utiliser pour les caractères des images beaucoup plus fines et attrayantes.

Un autre avantage du mode d'affichage par point est qu'il permet d'envisager de nouveaux effets visuels, plus complexes mais surtout plus attractifs pour le téléspectateur, pour mettre en valeur l'information affichée. Il est par exemple possible d'envisager des animations de chaînes de caractères affichées plus complexes que celles précédemment envisageables (clignotement, translation sur l'écran, changement des couleurs, etc.).

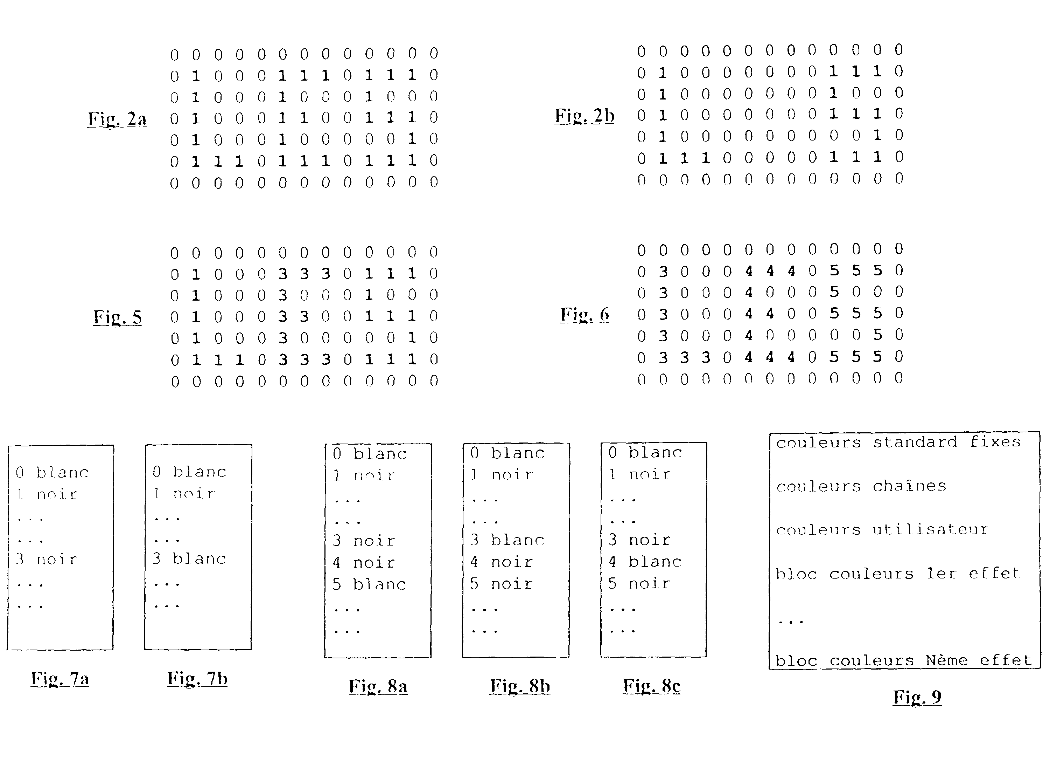

La figure 2a montre un exemple d'une partie d'une matrice de points, telle qu'elle est mémorisée par le circuit de calcul 16 dans la mémoire d'affichage 17. Si la palette de couleurs contenue dans la mémoire 14 indique que la couleur "blanc" est associée au code "0" et que la couleur "noir" est associée au code "1", alors les moyens d'affichage 18 impriment un point noir sur l'écran lorsque qu'un élément de la matrice est codé par un 1, et ils affichent un point blanc lorsqu'un point de la matrice est codé par un 0. Dans l'exemple de la figure 2a, le spectateur voit ainsi apparaître le mot "LES" sur l'écran 19 du récepteur 10 de télévision, écrit en noir sur fond blanc.

Dans un autre exemple, une instruction de clignotement à 1Hz est mémorisée en complément dans la mémoire 14. Ici, le circuit 16 calcule tout d'abord une première matrice de points telle que celle de la figure 2a, qui est immédiatement affichée sur l'écran 19. Le spectateur voir ainsi le mot "LES" sur l'écran.

Puis après un délai de ½ seconde, du fait de l'instruction d'effet contenue dans la mémoire 14, le circuit 16 calcule une nouvelle matrice de points dont une partie est représentée sur la figure 2b. La nouvelle matrice mémorisée dans la mémoire d'affichage 17 est immédiatement recopiée sur l'écran 19 en fonction de la palette de couleurs et le spectateur voit apparaître les lettres "L" et "S" sur l'écran.

Après un nouveau délai de ½ seconde, le circuit 16 calcule une nouvelle matrice de points ayant une partie telle que celle de la figure 2a. La nouvelle matrice est immédiatement recopiée sur l'écran en fonction de la même palette de couleurs et le spectateur voit à nouveau le mot "LES".

Le délai de ½ s utilisé est bien sûr ajusté de sorte que l'effet obtenu soit périodique, de fréquence 1 Hz. Ainsi, le spectateur voit finalement apparaître sur l'écran 19 le mot "LES" ayant une lettre "E" qui clignote.

L'affichage en mode points permet ainsi de mettre en valeur des données affichées sur l'écran du récepteur de télévision, par l'application d'effets visuels attractifs sur ces données.

Cependant, de tels effets sont en pratique complexes à effectuer, et demandent pour certains un temps relativement long pour apparaître sur l'écran. En effet, comme on l'a vu précédemment, il est nécessaire de modifier la matrice de points pour faire apparaître de tels effets. Pour cela, les circuits de calcul des récepteurs actuels tels que celui de la figure 1 doivent nécessairement recalculer entièrement la matrice de points car ils ne savent pas identifier dans une matrice de points, les éléments à modifier lorsque l'apparence d'un caractère particulier sur l'écran doit être changée. Or, le temps de calcul d'une matrice de points est relativement long.

Si un clignotement à 1 Hz est envisagé, alors une matrice de points doit être calculée et affichée sur l'écran en ½ seconde, ce qui est possible. Par contre si un clignotement plus rapide est envisagé, alors le circuit de calcul 16 et les moyens d'affichage 18 peuvent ne pas être assez rapides pour construire les matrices de points correspondantes et les afficher en assurant la fréquence de clignotement recherchée.

On connaît par le document "INMOS COLOUR LOOK-UP TABLES" MICROPROCESSORS AND MICROSYSTEMS, IPC BUSINESS PRESS LTD, LONDON, GB, vol 16 n° 1, 1992, un procédé d'affichage sur un écran utilisant une matrice de points à afficher et une palette de couleur définissant la couleur des points à afficher. Selon ce procédé, on peut modifier la palette d'affichage pour modifier la couleur des points affichés, par exemple pour obtenir un effet visuel tels que le clignotement, le flash, la surimpression.

Un but de l'invention est de mettre en oeuvre un nouveau procédé et de réaliser un nouveau dispositif associé d'affichage de texte sur un écran de récepteur de télévision, qui permet de réaliser un effet de clignotement des données affichées, tout en réduisant les temps de calcul nécessaire à la mise en oeuvre de l'effet recherché dans un mode d'affichage par point.

Plus généralement, un autre but de l'invention est de mettre en oeuvre un nouveau procédé et de réaliser un nouveau dispositif associé d'affichage de texte sur un écran, qui permet de réaliser, notamment mais pas uniquement, des effets visuels sur des données de type texte, tels que ceux définis dans la norme ETS 300 706.

Avec ces objectifs en vue, l'invention concerne un nouveau procédé d'affichage de texte sur un écran d'un récepteur de télévision, le texte étant reçu sous la forme de données numériques contenant des informations relatives au contenu informatif du texte et des informations relatives à la mise en forme de ce contenu pour l'affichage, les données numériques reçues étant décodées pour fournir d'une part une liste de caractères à afficher comprenant au moins un caractère, et une palette de couleurs comprenant au moins une couleur, et d'autre part, une matrice de points associée à la liste de caractères à afficher, chaque élément de la matrice de points définissant la couleur d'un point correspondant de l'écran.

Le procédé de l'invention est caractérisé en ce que, pour réaliser un effet visuel sur au moins un point de l'écran, on modifie au moins une couleur correspondante de la palette de couleurs, et en ce que, pour modifier une ou plusieurs couleurs de la palette de couleurs, on échange une partie de la palette de couleur avec une partie correspondante d'une palette d'effets associée à la palette de couleurs.

Les couleurs de la palette de couleurs peuvent également être modifiées par blocs de couleurs, un bloc de couleurs étant par exemple associé à un effet visuel.

Ainsi, dans l'invention, on se propose de faire complètement différemment de ce qui est fait aujourd'hui dans l'art antérieur. L'invention propose en effet, lorsqu'une modification de l'aspect visuel d'au moins un point d'un texte affiché sur l'écran est envisagée, de modifier la palette de couleurs associée à ce texte, au lieu de recalculer la matrice de points relative à un changement d'aspect.

Avec le procédé de l'invention, la matrice de points est calculée une seule fois. La mise en oeuvre d'un effet visuel se traduit ensuite uniquement par une modification de la palette de couleurs, ce qui est beaucoup plus rapide qu'un recalcul de matrice de points.

Selon un mode de réalisation, on modifie une couleur correspondante de la palette de couleurs, de manière répétitive à des intervalles de temps prédéfinis pour réaliser un effet visuel de clignotement d'un point de l'écran.

Selon un autre mode de réalisation, on modifie une ou plusieurs couleurs de la palette de couleurs pour réaliser plusieurs effets visuels sur plusieurs points de l'écran.

Selon un autre mode de réalisation, pour réaliser plusieurs effets visuels sur plusieurs points, on modifie plusieurs couleurs de la palette de couleurs, à des intervalles de temps différents.

Selon un mode de mise en oeuvre, le procédé de l'invention comprend les étapes suivantes :
E1 : réception d'un texte sous la forme de données numériques,
E2 : décodage des données numériques reçues et mémorisation de :
   - une liste de caractères à afficher comprenant au moins un caractère mis en forme,
   - une liste d'instructions d'effet comprenant éventuellement une instruction d'effet, et
   - une palette de couleurs,
E3 : calcul de la matrice de points à partir de la liste de caractères à afficher et d'une table de caractères, chaque caractère de la liste de caractères à afficher étant défini sous la forme d'un ensemble d'éléments de la matrice de points,
E4 : réalisation d'un test pour vérifier si la liste d'instructions d'effets comprend une instruction d'effet. Si le test est positif, réalisation des étapes E7 à E9 suivantes :
   E7 : mémorisation d'une palette d'effets
   E8 : affichage de la page et
      E81 : affichage de la matrice de points en fonction de la palette de couleurs,
      E82 : mesure d'un délai prédéfini,
      E83 : échange d'au moins une couleur de la palette de couleur avec une couleur correspondante de la palette d'effets, les étapes E82, E83 étant réalisées en parallèle de l'étape E8.
   E9 : réalisation d'un test pour vérifier si une nouvelle page est reçue, puis
   si le test est positif, réalisation d'une étape E1,
   si le test est négatif, réalisation d'une étape E8.

L'invention concerne également un récepteur de télévision pour mettre en oeuvre le procédé décrit ci-dessus, qui comprend notamment :
- un décodeur pour recevoir des données numériques représentatives d'un texte à afficher et extraire desdites données une liste de caractères à afficher, une liste d'instructions d'effets et une palette de couleurs initiale, et
- des moyens d'affichage, pour afficher, à partir d'une palette de couleurs, le contenu d'une matrice de points représentative de la liste de caractères à afficher,

Le récepteur de l'invention comprend également :
- un circuit de calcul pour calculer la matrice de points à partir de la liste de caractères à afficher et d'une table de caractères, et
- un circuit de mise à jour, pour modifier le contenu de la palette de couleurs en fonction de la liste d'instructions d'effets.

Le circuit de mise à jour comprend:
- des moyens de mémorisation, pour mémoriser une palette d'effets en fonction des instructions d'effet, et
- des moyens d'échange, pour échanger au moins une couleur de la palette de couleurs avec une couleur correspondante de la palette d'effets.

L'invention sera mieux comprise et d'autres caractéristiques et avantages apparaîtront à la lecture de la description qui va suivre, la description faisant référence aux dessins annexés dans lesquels :
- la figure 1, déjà décrite, est un schéma fonctionnel d'un récepteur de télévision selon l'art antérieur,
- les figures 2a et 2b, déjà décrites, représentent des exemples d'une matrice de points calculée par un composant du circuit de la figure 1,
- la figure 3 est un schéma fonctionnel d'un récepteur de télévision selon l'invention,
- la figure 4 est un diagramme d'un algorithme de mise en oeuvre d'un procédé d'affichage de texte, selon l'invention.
- les figures 5, 6 sont des exemples d'une partie d'une matrice de points calculée par un composant de la figure 3,
- les figures 7a, 7b, 8a à 8c montrent l'évolution en fonction du temps d'une partie du contenu d'un élément du circuit de la figure 3, et
- la figure 9 détaille le contenu d'un élément du circuit de la figure 3.

Le récepteur de télévision 30 selon l'invention est représenté sur la figure 3. De même que le récepteur de l'art antérieur représenté sur la figure 1, le récepteur 30 selon l'invention comprend un décodeur 33 une mémoire vive 34, une mémoire morte 35, une mémoire d'affichage 37, un moyen d'affichage 38 et un écran 39. Les éléments 33 à 35 et 37 à 39 sont identiques à ceux correspondants 13 à 15, 17 à 19 du circuit de la figure 1 et ils fonctionnent de manière identique. Les mémoires 34, 35 comprennent également les mêmes données (liste de caractères à afficher, liste d'instructions d'effet, palette de couleurs et table de caractères) que les mémoires 14, 15 correspondantes.

Le récepteur 30 de l'invention diffère de celui de l'art antérieur notamment sur les deux points suivants: le circuit 16 a été remplacé par un nouveau circuit de calcul 36 et un circuit de mise à jour 40 a été ajouté.

Le circuit 36 est connecté à la mémoire 14 pour recevoir la liste de caractères à afficher et à la mémoire 15 pour recevoir la table de caractères. Contrairement au circuit 16, le circuit 36 n'est pas connecté à la mémoire 34 pour recevoir la liste d'instructions d'effets. Le circuit 36 calcule une matrice de points associée à la liste de caractères à afficher à partir de la table de caractères et il mémorise cette matrice dans la mémoire d'affichage 37. Le circuit de calcul 36 de l'invention ne prend pas en compte la liste d'instructions d'effets.

Le circuit de mise à jour 40 est connecté à la mémoire 14 pour recevoir les instructions d'effet. Le circuit 40 est également connecté à la mémoire 14 pour échanger des données avec la palette de couleur. Le circuit de mise à jour (non détaillé sur la figure 3) comprend notamment un circuit de temporisation pour mesurer un délai, une mémoire vive pour mémoriser une palette d'effets et des moyens pour échanger tout ou partie du contenu de la palette de couleurs avec le contenu correspondant de la palette d'effet, en fonction d'une ou de plusieurs instructions d'effet, comme on le verra mieux par la suite.

Sur la figure 3, le récepteur 30 comprend une unique mémoire vive 34 pour mémoriser l'ensemble des informations extraites des données reçues. Dans une variante, cette mémoire 34 peut être remplacée par plusieurs mémoires, pour mémoriser respectivement la liste des caractères à afficher, la liste des instructions d'effets, et la palette de couleurs. Il est également possible de remplacer une partie de la mémoire par un registre, par exemple pour mémoriser la palette de couleurs.

Le procédé de l'invention, mis en oeuvre avec le récepteur de télévision 30, va maintenant être décrit en relation avec le diagramme de la figure 4.

Au cours d'une étape E1, les données numériques relatives à un texte sont reçues par le décodeur 33. On se limite ici à la réception des données, quelle que soit leur origine. Par exemple, si les données ont pour origine un programme télétexte, la gestion de la réception des pages (ordre, numéro, etc.), de même que les problèmes liés à la mémorisation éventuelle de ces pages ne sont pas envisagés ici.

Au cours d'une étape E2, les données numériques reçues sont décodées par le décodeur 33 qui extrait et mémorise dans la mémoire vive 14 les informations suivantes :
- une liste des caractères à afficher (étape E21),
- une liste d'instructions d'effet (étape E22),
- une palette de couleurs (étape E23).

Comme précédemment, la liste des caractères à afficher contient un ensemble de caractères mis en forme et définis par un code de caractère, un code de couleur d'encre et un code de couleur de fond. La liste d'instructions contient quant à elle une ou des instructions (éventuellement aucune) définissant un ou des effets visuels à appliquer à tout ou partie des caractères de la liste des caractères à afficher. Un effet visuel est par exemple défini par une instruction de type : "faire clignoter les caractères x, y, z à la fréquence de 3 Hz" ou bien "effacer le caractère A au bout de 50 secondes"

Au cours d'une étape E3, une matrice de points caractéristique du texte reçu est calculée par le circuit 36 à partir de la liste de caractères à afficher et de la table de caractères contenue dans la mémoire morte 15. La matrice de points est ensuite mémorisée dans la mémoire d'affichage 17. Chaque élément de la matrice comprend un code couleur, associé à une couleur de la palette de couleurs. Comme précédemment, la matrice de points définit la couleur de chaque point de l'écran 39.

Un test E4 est ensuite effectué par le circuit de mise à jour 40 pour savoir si une instruction d'effet a été mémorisée dans la mémoire 34 ou pas.

Si aucune instruction d'effet n'est détectée, alors une étape E5 d'affichage est réalisée : les moyens d'affichaqe 38 recopient sur l'écran 39 le contenu de la mémoire d'affichage, en fonction de la palette de couleurs.

Puis un deuxième test est effectué (étape E6) pour savoir si un nouveau texte est transmis au récepteur de télévision ou pas. L'expression "nouveau texte" doit être ici considérée au sens large et fait référence à un texte différent du texte actuellement affiché. En particulier, une mise à jour du texte actuellement affiché sur l'écran 39 est considérée ici comme un nouveau texte. Rappelons également que le mot "texte" fait ici référence à une page télétexte émise par une chaîne de télévision, ou à une chaîne de caractères, un menu, fourni par un circuit de gestion du fonctionnement du récepteur.

Si aucun nouveau texte n'est reçu (test de l'étape E6 négatif), alors une nouvelle étape E6 est effectuée. Au contraire, si un nouveau texte est en cours de réception par le décodeur 33, alors une nouvelle étape E1 est effectuée.

Si au cours de l'étape E4, une instruction d'effet est lue dans la mémoire 14, alors les étapes E7 à E9 suivantes sont effectuées.

Au cours de l'étape E7 une palette d'effets nécessaire à la mise en oeuvre de l'effet souhaitée est mémorisée dans la mémoire vive du circuit 40. De même que la palette de couleurs, la palette d'effets est une table dans laquelle est associée, à chaque code couleur, une définition de la couleur correspondante. Les codes couleurs de la palette d'effets sont des éléments de la palette de couleurs, par contre la couleur associée à un code couleur dans la palette d'effet peut être différente de la couleur associée au même code couleur dans la palette de couleurs. La palette d'effets comprend un nombre d'éléments inférieur ou égal à celui de la palette de couleurs.

Puis au cours d'une étape E8, le texte reçu est affiché sur l'écran 39 conformément à l'effet souhaité. Pour cela, les moyens d'affichage 38 lisent en permanence le contenu de la mémoire 37 et recopient la matrice de points sur l'écran 39 (étape E81). En parallèle à l'étape E81, après un délai mesuré par le circuit de temporisation du circuit 40 (étape E82), le circuit 40 échange tout ou partie du contenu de la palette de couleurs avec la partie correspondante de la palette d'effets (étape E83). La durée du délai (étape E82) et le choix des couleurs à échanger (étape E83) dépend de l'effet visuel (ou éventuellement des effets) à appliquer.

Enfin, un troisième test (étape E9) est effectué. Si un nouveau texte est reçu par le décodeur 33, alors une nouvelle étape E1 est effectuée. Sinon, si aucun nouveau texte n'est transmis, alors une nouvelle étape E8 est effectuée.

Le procédé de l'invention peut être finalement interrompu à tout moment sur une instruction extérieure de l'utilisateur (extinction du programme, changement de texte à afficher, changement de programme, etc.).

Les différentes étapes du procédé de l'invention vont maintenant être décrites plus en détails dans des exemples, utilisant différents effets visuels, en relation avec les figures 5, 6, 7a, 7b, 8a à 8c, 9.

Un premier exemple d'effet visuel est le clignotement tel qu'il a été décrit précédemment et qui est mis en oeuvre de manière simple avec l'invention. On suppose ici pour simplifier qu'un texte est transmis au décodeur 33 qui comprend les caractères du mot "LES". Ces caractères doivent être affichés en noir sur fond blanc et la lettre "E", initialement en noir sur fond blanc, doit clignoter à une fréquence de 1 Hz. On suppose enfin que le texte n'est pas modifié au cours du temps.

Les données sont reçues au cours de l'étape E1 puis décodés au cours de l'étape E2. Le décodeur 33 mémorise alors dans la mémoire 34 :
- la liste de caractères "LES" à afficher mis en forme (E21) : couleur d'encre = noir, couleur de fond = blanc,
- la liste d'instructions d'effet (E22) : "faire clignoter la lettre "E" à la fréquence de 1 Hz,

Le décodeur 33 définit ensuite (E23) la liste des couleurs à utiliser et leur associe un code de couleur de la manière suivante :
- le décodeur définit tout d'abord des codes couleurs pour les couleurs utilisées pour des caractères dont l'aspect n'évolue pas au cours du temps. Ici, les lettres "L" et "S" sont affichées en permanence en noir sur fond blanc. Le décodeur 33 leur attribue les codes : 0 = blanc et 1 = noir.
- le décodeur 33 définit ensuite un nouveau code couleur qui sera utilisé pour des caractères dont l'apparence sur l'écran évolue au cours du temps. Ici, la lettre "E" clignote, elle apparaît à l'écran alternativement soit noir sur fond blanc, soit blanc sur fond blanc. De plus, initialement, la lettre "E" est en noir sur fond blanc. Ainsi, le décodeur définit par exemple le code 3 et lui attribue la couleur 3 = "noir".

Les trois codes ainsi définis constituent la palette de couleurs (figure 7a) ; elle est mémorisée dans la mémoire 34.

Au cours de l'étape E3 suivante, le circuit de calcul 36 construit une matrice de points à partir de la liste de caractères à afficher et de la table de caractères contenue dans la mémoire morte 35. La matrice de points obtenue est représentée sur la figure 5. Les éléments constituant les lettres "L" et "S" ont le code "1", les éléments de la lettre "E" qui doit être affichée différemment ont le code 3 et tous les autres éléments constituant le fond ont le code 0.

Le circuit 40 de mise à jour effectue ensuite le test E4 puis, le résultat étant positif, il effectue l'étape E7 en réalisant la palette d'effets de la manière suivante (figure 7b) :
- les éléments de la palette de couleurs utilisés pour afficher des caractères sans effet visuel sont recopiés à l'identique dans la palette d'effet, les codes 0 = "blanc" et 1 = "noir" sont ainsi recopiés.
- les éléments de la palette de couleurs utilisés pour afficher des caractères avec effet visuel sont modifiés, ainsi dans l'exemple, le code 3 = "noir" est remplacé par le code 3 = "blanc" car la lettre "E" doit apparaître alternativement noir ou blanc.

La palette d'effets obtenue est mémorisée dans la mémoire vive du circuit de mise à jour.

Il est encore possible de mémoriser dans la palette d'effet uniquement les codes des couleurs utilisés pour réaliser un effet puisque les couleurs utilisées pour afficher des caractères sans effet ne sont pas modifiées. On diminue ainsi l'espace mémoire nécessaire pour stocker la palette d'effets. On veillera le cas échéant à identifier clairement la partie de la palette de couleurs qui doit être échangée avec la palette d'effet (adresse de la première couleur à changer et/ou nombre de couleurs à changer et/ou adresse de la dernière couleur à changer) pour effectuer correctement l'étape E83.

L'étape d'affichage E8 est ensuite réalisée. Les moyens d'affichage 38 recopient le contenu de la mémoire 37 (E81) et le mot "LES" apparaît sur l'écran 39 en noir sur fond blanc car les éléments de la matrice de points codés 1 ou 3 sont affichés en noir. En parallèle, après un délai (E82) de ½ s nécessaire pour obtenir un clignotement à 1 Hz, le circuit de mise à jour 40 échange (E83) le contenu de la palette de couleurs avec celui de la palette d'effets et la couleur associée au code 3 est changée : 3 = "blanc" dans la palette de couleurs et 3 = "noir" dans la palettes d'effets. Comme la matrice est recopiée en permanence sur l'écran, la lettre "E" disparaît de l'écran.

Comme le texte n'est pas rafraîchi au cours du temps (pas de nouveau texte reçu), une nouvelle étape E8 est réalisée. Le code 3 de la palette de couleurs est à nouveau modifié : 3 = "noir" dans la palette de couleur ; la lettre "E" réapparaît sur l'écran. La lettre "E" va ainsi clignoter jusqu'à ce qu'une interruption extérieure soit reçue.

Un deuxième exemple d'effet visuel est l'effet de translation, plus communément appelé effet "chenillard", qui consiste à faire clignoter des caractères d'une chaîne de caractères à la même fréquence mais décalés dans le temps, donnant ainsi un effet de translation de la chaîne de caractères sur l'écran. Pour le mot "LES" de trois lettres, les chaînes de caractères suivantes apparaissent successivement sur l'écran : "LE ", puis " ES", puis "L S", puis "LE ", chaque lettre disparaissant de l'écran à tour de rôle pendant un tiers de période.

Cet effet est mis en oeuvre avec l'invention de la manière suivante. On suppose là encore qu'un texte est transmis au décodeur 33 comprenant les lettres du mot "LES", que ces caractères doivent être affichés en noir sur fond blanc, et qu'ils doivent de plus apparaître avec un effet de translation à une fréquence de 2 Hz (soit une période de ½ s). On suppose enfin que le texte n'est pas modifié au cours du temps.

Les données sont reçues au cours de l'étape E1 puis décodées au cours de l'étape E2. Le décodeur 33 mémorise alors dans la mémoire 34 :
- la liste de caractères à afficher mis en forme (E21) : couleur d'encre = "noir", couleur de fond = "blanc",
- la liste d'instructions d'effet (E22) : "faire clignoter les lettres "LES" à la fréquence de 2 Hz avec un effet de translation",

Le décodeur 33 définit ensuite (E23) la liste des couleurs à utiliser et leur associe un code de couleur (figure 8a).
- la couleur de fond et la couleur d'encre sont ici des couleurs standards des programmes télétexte. Le décodeur 33 leur attribue les codes : 0 = "blanc" et 1 = "noir". Il est à noter que dans cet exemple, la couleur noir ne sera pas utilisée comme couleur permanente, en conséquence le code 1 = "noir" pourrait ne pas être défini.
- le décodeur 33 définit également trois nouveaux codes couleurs, un pour chaque caractère à afficher (figure 7a) : : 3 = "noir", 4 = "noir", 5 = "blanc".

Les codes ainsi définis constituent la palette de couleurs qui est mémorisée dans la mémoire 34.

Au cours de l'étape E3 suivante, le circuit de calcul 36 construit une matrice de points à partir de la liste de caractères à afficher et de la table de caractères contenue dans la mémoire morte 35. La matrice de points obtenue est représentée sur la figure 6. Les éléments constituant la lettre "L" ont le code "3", les éléments de la lettre "E" ont le code "4", les éléments de la lettre "S" ont le code "5" et tous les autres éléments constituant le fond ont le code "0".

Le circuit 40 de mise à jour effectue ensuite le test E4 puis, le résultat étant positif, il effectue l'étape E7 en réalisant la palette d'effet de la manière suivante (figure 8b) :
- les éléments de la palette de couleurs utilisés pour afficher des caractères sans effet visuel sont recopiés à l'identique dans la palette d'effet, les codes 0 = "blanc" et 1 = "noir" sont ainsi recopiés.
- les éléments de la palette de couleurs utilisés pour afficher des caractères avec effet visuel sont modifiés ici par permutation circulaire des codes. Ainsi, ici, le code 3 = "noir" est remplacé par le code 3 = "blanc", le code 4 = "noir" est remplacé par le code 4 = "noir" et le code 5 = "blanc" est remplacé par le code 5 = "noir".

La palette d'effets (figure 8b) obtenue est ensuite mémorisée dans la mémoire vive du circuit de mise à jour.

Là aussi, il est possible de mémoriser dans la palette d'effet uniquement les codes des couleurs utilisées pour réaliser un effet. On diminue ainsi l'espace mémoire nécessaire pour stocker la palette d'effets.

L'étape d'affichage E8 est ensuite réalisée. Les moyens d'affichage 38 recopient le contenu de la mémoire 37 (E81) et les caractères "LE " apparaissent sur l'écran 39 en noir sur fond blanc car les éléments de la matrice de points codés 3 ou 4 sont affichés en noir et les éléments codés 5 sont affichés en blanc. En parallèle, après un délai (E82) de 0.167 s (soit 1/3 de la période, la période étant égale à 1/2Hz soit ½ s), le circuit de mise à jour 40 échange (E83) le contenu de la palette de couleurs avec celui de la palette d'effets. Comme la matrice est recopiée en permanence sur l'écran, les caractères " ES" apparaissent sur l'écran.

Une étape complémentaire E83' (non représentée sur la figure 4) est ensuite effectuée :
E83' : permutation circulaire des codes 3 à 5 dans la palette d'effets. Une nouvelle palette d'effets telle que celle représentée sur la figure 8c est obtenue.

Comme le texte n'est pas modifié au cours du temps, une nouvelle étape E8 est réalisée. Après un nouveau délai de 0.167 s (étape E82), les codes 3 à 5 de la palette de couleurs sont à nouveau échangés (étapes E83) avec ceux de la palette d'effets. Les codes de la palette de couleurs sont alors définis par 3 = "noir", 4 = "blanc", 5 = "noir". Les caractères "L S" apparaissent sur l'écran. Les codes de la palette d'effets sont ensuite modifiés (étape E83') pour obtenir une palette telle que celle représentée sur la figure 8a.

Lors de l'étape E8 suivante, les caractères "LE " vont apparaître après un nouveau délai de 0.167 s.

Des variantes du procédé de l'invention peuvent aisément être envisagées, notamment pour réaliser des effets visuels différents de ceux précédemment décrits.

Par exemple, il est possible de faire clignoter simultanément tous les caractères d'une même chaîne de caractères, il suffit pour cela d'utiliser dans la matrice de points le même code de couleur pour tous les éléments de la matrice qui correspondent à la chaîne de caractères.

Il est également possible de réaliser un clignotement d'un caractère ou d'une chaîne de caractères à une fréquence différente de 1 Hz, il suffit pour cela de modifier la durée du délai lors de l'étape E82.

Il est encore possible d'effacer une chaîne de caractères en la rendant invisible au bout d'un temps T. Il suffit pour cela de fixer un délai de duré T lors de la première réalisation de l'étape E82, puis un délai très long lors de la deuxième réalisation de l'étape E82.

De même, si deux chaînes de caractères doivent être affichées avec des couleurs d'encre différentes, et si ces chaînes de caractères doivent clignoter simultanément, alors deux nouveaux codes couleurs sont définis dans la palette de couleurs et associés à une première couleur lors de l'étape E23 et ces mêmes codes couleurs sont associés à des couleurs différentes dans la palette d'effets lors de l'étape E7.

Il est encore possible de faire clignoter une chaîne de caractères à une première fréquence et une autre chaîne de caractères à une deuxième fréquence. Il suffit pour cela d'attribuer un premier code de couleur aux éléments de la première chaîne et un deuxième code couleurs aux éléments de la deuxième chaîne. Le délai de l'étape E82 devra bien sûr dans ce cas être modifié de sorte que le contenu de la palette de couleurs soit modifié chaque fois que la couleur d'un point sur l'écran doit changer.

Un autre type d'effet de translation peut également être obtenu simplement en changeant le sens de permutation des codes de couleurs dans la palette d'effets.

Bien sûr, il est possible de cumuler simultanément plusieurs effets sur une même page et / ou plusieurs effets sur une même chaîne de caractères. Dans ce cas, les étapes E82, E83 du procédé devront être modifiées en conséquence.

Dans un mode de réalisation préféré de l'invention, le ou les nouveaux codes de couleurs définis spécialement pour réaliser un effet visuel, sont choisis parmi les codes couleurs non utilisés par les chaînes émettrices.

En effet, comme on l'a vu précédemment, 16 couleurs sont fixes, prédéfinies dans la norme ETS et communes à toutes les chaînes de télévision proposant un service télétexte ; ces 16 couleurs sont par exemple mémorisées par avance dans la mémoire 14. Ces couleurs sont par exemple le blanc, le noir, un rouge, un bleu, etc.

Par ailleurs 16 autres couleurs sont réservées pour la chaîne émettrice d'un programme télétexte. Pour cela, la chaîne émettrice envoie, par exemple en début de programme ou en début de chaque page, une définition des couleurs qu'elle choisit d'utiliser pour le programme complet ou pour une page particulière. Ces couleurs définies par la chaîne sont mémorisées au cours de l'étape E23.

Enfin, il est également envisagé de réserver 64 autres couleurs pour les fabricants de récepteurs de télévision.

Si les codes couleurs sont codés sur 8 bits, alors il est possible de définir au total 2⁸=256 codes couleurs. Dans ce cas, lors de la définition des nouveaux codes couleurs nécessaires à la mise en oeuvre d'un effet visuel, on utilise de préférence les 256-64-32 = 160 codes couleurs non utilisées par les chaînes émettrices ou les fabricants de récepteurs de télévision. Ainsi plutôt que de définir les codes 3, 4 ou 5 comme dans les exemples des figures 7, 8, on préfère utiliser des codes supérieurs à 96, afin d'éviter tout risque de confusion.

Il est à noter que les valeurs numériques ci-dessus (nombre de couleurs réservées pour les chaînes de télévision et / ou les fabricants de récepteurs de télévision) sont données uniquement à titre d'exemple non limitatif de l'invention. D'autres exemples sont envisageables. Les normes régissant le télétexte et / ou l'affichage sur écran de manière générale peuvent évoluer, le procédé de l'invention sera dans ce cas adapté en conséquence. De plus, si l'invention est utilisée dans un récepteur de télévision dans lequel il n'est pas prévu d'affichage de textes ou de menus par le fabricant, il est tout à fait possible d'utiliser les codes supérieurs à 32.

Selon un autre mode de réalisation de l'invention, les couleurs de la palette de couleurs et celles de la palette d'effets sont regroupées par bloc, comme le montre la figure 9. Ainsi, les 16 couleurs fixées sont regroupées dans un premier bloc de couleurs standard. Les couleurs définies par la chaîne émettrice sont regroupées dans un deuxième bloc de 16 couleurs, les couleurs définies par le fabricant de récepteurs de télévision sont définies dans un troisième bloc de 64 couleurs, les couleurs nécessaires à la réalisation d'un première effet visuel sont regroupées dans un quatrième bloc, les couleurs nécessaires à la réalisation d'un deuxième effet visuel sont regroupées dans un cinquième bloc, etc. Ainsi, au cours des étapes E83 et / ou E83' seul l'un ou l'autre des blocs de couleurs est réellement modifié, ce qui réduit la durée de ces étapes.

Il est encore possible de mémoriser dans la palette d'effet uniquement les codes des couleurs utilisées pour réaliser un effet. On diminue ainsi l'espace mémoire nécessaire pour stocker la palette d'effets.

## Revendications

1. Procédé d'affichage d'un texte sur un écran (39) d'un récepteur de télévision (30), le texte étant reçu sous la forme de données numériques contenant des informations relatives au contenu informatif du texte et des informations relatives à la mise en forme de ce contenu pour l'affichage, les données numériques reçues étant décodées pour fournir d'une part une liste de caractères à afficher comprenant au moins un caractère, et une palette de couleurs comprenant au moins une couleur, et d'autre part, une matrice de points associée à la liste de caractères à afficher, chaque élément de la matrice de points définissant la couleur d'un point correspondant de l'écran (39),
le procédé étant **caractérisé en ce que**, pour réaliser un effet visuel sur au moins un point de l'écran, au moins une couleur de la palette de couleurs est modifiée, et **en ce que**, pour modifier une ou plusieurs couleurs de la palette de couleurs, une partie de la palette de couleurs avec une partie correspondante d'une palette d'effets associée à la palette de couleurs sont échangées.

2. Procédé selon la revendication 1, **caractérisé en ce que**, pour réaliser un effet visuel de clignotement d'un point de l'écran, une couleur de la palette de couleurs est modifiée de manière répétitive à des intervalles de temps prédéfinis.

3. Procédé selon la revendication 1, **caractérisé en ce que**, pour réaliser plusieurs effets visuels sur plusieurs points de l'écran (39), une ou plusieurs couleurs de la palette de couleurs sont modifiées.

4. Procédé selon la revendication 3, **caractérisé en ce que**, pour réaliser plusieurs effets visuels sur plusieurs points, plusieurs couleurs de la palette de couleurs sont modifiées à des intervalles de temps différents.

5. Procédé selon l'une des revendications 3 à 4, **caractérisé en ce que** les couleurs de la palette de couleurs sont modifiées par blocs de couleurs, chaque bloc étant associé à un effet visuel propre.

6. Procédé selon l'une des revendications 1 à 5, **caractérisé en ce que** il comprend les étapes suivantes :
E1 : réception d'un texte sous la forme de données numériques,
E2 : décodage des données numériques reçues et mémorisation de :
- une liste de caractères à afficher comprenant au moins un caractère mis en forme,
- une liste d'instructions d'effet comprenant éventuellement une instruction d'effet, et
- une palette de couleurs,
E3 : calcul de la matrice de points à partir de la liste de caractères à afficher et d'une table de caractères, chaque caractère de la liste de caractères à afficher étant défini sous la forme d'un ensemble d'éléments de la matrice de points,
E4 : réalisation d'un test pour vérifier si la liste d'instructions d'effets comprend une instruction d'effet. Si le test est positif, réalisation des étapes E7 - E9 suivantes :
E7 : mémorisation d'une palette d'effets
E8 : affichage de la page :
E81 : affichage de la matrice de points en fonction de la palette de couleurs,
E82 : mesure d'un délai prédéfini,
E83 : échange d'au moins une couleur de la palette de couleur avec une couleur correspondante de la palette d'effets, les étapes E82, E83 étant réalisées en parallèle de l'étape E81.
E9 : réalisation d'un test pour vérifier si un nouveau texte est reçu, puis
si le test est positif, réalisation d'une étape E1,
si le test est négatif, réalisation d'une étape E8.

7. Récepteur de télévision (30) pour l'affichage de textes, comportant :
- un décodeur (33) pour recevoir des données numériques représentatives d'un texte à afficher et extraire desdites données une liste de caractères à afficher, une liste d'instructions d'effets et une palette de couleurs initiale,
- des moyens d'affichage (38), pour afficher, à partir d'une palette de couleurs, le contenu d'une matrice de points représentative de la liste de caractères à afficher, et
- un circuit de calcul (36) pour calculer la matrice de points à partir de la liste de caractères à afficher et d'une table de caractères,
le récepteur étant **caractérisé en ce qu'**il comprend également :
- un circuit de mise à jour (40), pour modifier le contenu de la palette de couleurs en fonction de la liste d'instructions d'effets, le circuit de mise à jour (40) comprenant :
- des moyens de mémorisation, pour mémoriser une palette d'effets en fonction des instructions d'effet, et
- des moyens d'échange, pour échanger au moins une couleur de la palette de couleurs avec une couleur correspondante de la palette d'effets.

## Patentansprüche

1. Verfahren zum Anzeigen eines Texts auf einem Schirm (39) eines Fernsehempfängers (30), wobei der Text in Form von digitalen Daten empfangen wird, die Informationen bezüglich des Informationsgehaltes des Texts sowie Informationen bezüglich der Formatierung dieses Inhalts bei der Anzeige enthalten, wobei die empfangenen digitalen Daten decodiert werden, um einerseits eine Liste von Zeichen, die angezeigt werden sollen, mit wenigstens einem Zeichen sowie eine Farbpalette mit wenigstens einer Farbe und andererseits eine Punktmatrix, die zu der Liste der anzuzeigenden Zeichen gehört, wobei jedes Element der Punktmatrix die Farbe eines entsprechenden Punktes auf dem Schirm (39) definiert, zu erzeugen,
wobei das Verfahren **dadurch gekennzeichnet ist, dass** für die Realisierung eines visuellen Effektes an wenigstens einem Punkt des Schirms wenigstens eine Farbe der Farbpalette modifiziert wird und dass zur Modifizierung einer oder mehrerer Farben der Farbpalette ein Teil der Farbpalette mit einem entsprechenden Teil einer Effektpalette, die zu der Farbpalette gehört, ausgetauscht wird.

2. Verfahren nach Anspruch 1, **dadurch gekennzeichnet, dass** zur Realisierung eines visuellen Blinkeffektes eines Punkts auf dem Schirm eine Farbe der Farbpalette in vorgegebenen Zeitintervallen wiederholt modifiziert wird.

3. Verfahren nach Anspruch 1, **dadurch gekennzeichnet, dass** zur Realisierung mehrerer visueller Effekte an mehreren Punkten auf dem Schirm (39) eine oder mehrere Farben der Farbpalette modifiziert werden.

4. Verfahren nach Anspruch 3, **dadurch gekennzeichnet, dass** zur Realisierung mehrerer visueller Effektes an mehreren Punkten mehrere Farben der Farbpalette in verschiedenen Zeitintervallen modifiziert werden.

5. Verfahren nach einem der Ansprüche 3 bis 4, **dadurch gekennzeichnet, dass** die Farben der Farbpalette als Farbblöcke modifiziert werden, wobei jeder Block einem eigenen visuellen Effekt zugeordnet ist.

6. Verfahren nach einem der Ansprüche 1 bis 5, **dadurch gekennzeichnet, dass** es die folgenden Schritte umfasst:
E1: Empfangen eines Textes in Form von digitalen Daten,
E2: Decodieren der digitalen Daten, die empfangen wurden, und Abspeichern von:
- einer Liste von Zeichen, die anzuzeigen sind, mit wenigstens einem formatierten Zeichen,
- einer Liste mit Effektanweisungen, die gegebenenfalls eine Effektanweisung enthält, und
- einer Farbpalette,
E3: Berechnen der Punktmatrix aus der Liste von anzuzeigenden Zeichen und einer Liste von Zeichen, wobei jedes Zeichen der Liste von Zeichen, die angezeigt werden sollen, in Form einer Gruppe von Elementen der Punktmatrix definiert ist,
E4: Durchführen eines Tests, um zu verifizieren, ob die Liste von Effektanweisungen eine Effektanweisung enthält; wenn der Test positiv ausfällt, Durchführungen der folgenden Schritte E7 - E9:
E7: Abspeichern einer Effektpalette,
E8: Anzeigen der Seite:
E81: Anzeigen der Punktmatrix in Abhängigkeit von der Farbpalette,
E82: Abwarten einer vorgegebenen Verzögerung,
E83:Austauschen wenigstens einer Farbe der Farbpalette mit einer Farbe, die der Effektpalette entspricht, wobei die Schritte E82, E83 parallel zum Schritt E81 ausgeführt werden,
E9: Ausführen eines Tests, um festzustellen, ob ein neuer Text empfangen wurde, anschließend
wenn der Test positiv verläuft, Ausführen eines Schrittes E1,
wenn der Test negativ verläuft, Ausführen eines Schrittes E8.

7. Fernsehempfänger (30) zum Anzeigen von Texten mit:
einem Decoder (33) zum Empfangen von digitalen Daten, die einen anzuzeigenden Text darstellen, und Extrahieren einer Liste von anzuzeigenden Zeichen, einer Liste von Effektanweisungen und einer ursprünglichen Farbpalette aus diesen Daten,
Anzeigeeinrichtungen (38), um ausgehend von einer Farbpalette den Inhalt einer Punktmatrix anzuzeigen, die die Liste der anzuzeigenden Zeichen darstellt, und
einem Rechenschaltkreis (36) zum Berechnen der Punktmatrix aus der Liste von anzuzeigenden Zeichen und einer Tabelle mit Zeichen,
wobei der Empfänger **dadurch gekennzeichnet ist, dass** er außerdem umfasst:
einen Schaltkreis zum Aktualisieren (40), um den Inhalt der Farbpalette in Abhängigkeit von der Liste der Effektanweisungen zu modifizieren, wobei der Schaltkreis zum Aktualisieren (40) umfasst:
Abspeicherungseinrichtungen, um eine Effektpalette in Abhängigkeit von Effektanweisungen abzuspeichern, und
Austauscheinrichtungen, um wenigstens eine Farbe der Farbpalette mit einer entsprechenden Farbe der Effektpalette auszutauschen.

## Claims

1. Method of displaying a text on the screen (39) of a television receiver (30), the text being received in the form of digital data containing information relating to the informative content of the text and information relating to the formatting of this content for display, the digital data received being decoded in order to supply on the one hand a list of characters to be displayed comprising at least one character, and a palette of colours comprising at least one colour, and on the other hand a matrix of points associated with the list of characters to be displayed, each element in the matrix of points defining the colour of a corresponding point on the screen (39),
the method being **characterised in that**, in order to achieve a visual effect on at least one point on the screen, at least one colour in the palette of colours is modified, and **in that**, in order to modify one or more colours in the palette of colours, a part of the palette of colours with a corresponding part of a palette of effects associated with the palette of colours are exchanged.

2. Method according to Claim 1, **characterised in that**, in order to achieve a visual effect of blinking of a point on the screen, a colour in the palette of colours is modified repetitively at predefined intervals of time.

3. Method according to Claim 1, **characterised in that**, in order to achieve several visual effects on several points on the screen (39), one or more colours in the palette of colours are modified.

4. Method according to Claim 3, **characterised in that**, in order to achieve several visual effects on several points, several colours in the palette of colours are modified at different intervals of time.

5. Method according to one of Claims 3 to 4, **characterised in that** the colours in the palette of colours are modified by blocks of colours, each block being associated with a particular visual effect.

6. Method according to one of Claims 1 to 5, **characterised in that** it comprises the following steps:
E1: reception of a text in the form of digital data,
E2: decoding of the digital data received and storage of:
- a list of characters to be displayed comprising at least one formatted character,
- a list of effect instructions possibly comprising an effect instruction, and
- a palette of colours,
E3: calculating the matrix of points from the list of characters to be displayed and a table of characters, each character in the list of characters to be displayed being defined in the form of a set of elements of the matrix of points;
E4: performing a test in order to check whether the list of instructions of effects comprises an effect instruction. If the test is positive, performance of the following steps E7-E9:
E7: storage of a palette of effects;
E8: display of the page:
E81: display of the matrix of points according to the palette of colours,
E82: measurement of a predefined delay,
E83: exchange of at least one colour in the palette of colours with a corresponding colour in the palette of effects, steps E82, E83 being performed in parallel with step E81,
E9: performing a test in order to check whether a new text is received, and then
if the test is positive, performing a step E1,
if the test is negative, performing a step E8.

7. Television receiver (30) for displaying text, comprising:
- a decoder (33) for receiving digital data representing a text to be displayed and extracting from the said data a list of characters to be displayed, a list of effect instructions and an initial palette of colours,
- display means (38) for displaying, from a palette of colours, the content of a matrix of points representing the list of characters to be displayed, and
- a calculation circuit (36) for calculating the matrix of points from the list of characters to be displayed and a table of characters,
the receiver being **characterised in that** it also comprises:
- an updating circuit (40) for modifying the content of the palette of colours according to the list of effect instructions, the updating circuit (40) comprising:
- storage means for storing a palette of effects according to the effect instructions, and
- exchange means for exchanging at least one colour in the palette of colours with a corresponding colour in the palette of effects.
